# EUROPEAN PATENT SPECIFICATION

(11) **EP 2 729 900 B1**
(45) Date of publication and mention of the grant of the patent: **11.10.2017**
(21) Application number: 11869036.1
(22) Date of filing: 06.07.2011
(51) Int. Cl.: G06K 9/46, H04N 21/2343, H04N 21/41, H04N 21/6379, H04N 21/647

(54) **TRANSCODING DETECTION AND ADJUSTMENT OF CONTENT FOR OPTIMAL DISPLAY**
TRANSKODIERUNGSERKENNUNG UND EINSTELLUNG VON INHALTEN FÜR OPTIMALE ANZEIGE
DÉTECTION DE TRANSCODAGE ET AJUSTEMENT D'UN CONTENU POUR UN AFFICHAGE OPTIMAL

(43) Date of publication of application: 14.05.2014
(73) Proprietor: Empire Technology Development, LLC, Wilmington DE 19808 (US)
(72) Inventor: KRUGLICK, Ezekiel, Poway, CA 92064-2276 (US)
(74) Representative: Dendorfer, Claus
(86) International application number: PCT/US2011/043018
(87) International publication number: WO 2013/006168

(56) References cited:
- US-A1- 2003 112 996
- US-A1- 2008 066 113
- US-A1- 2008 259 799
- US-A1- 2009 006 643
- US-A1- 2009 028 428
- US-A1- 2009 154 368
- US-A1- 2010 223 649
- US-A1- 2011 161 409
- US-B2- 7 975 062
- BO WANG ET AL: "A New Approach Measuring Users' QoE in the IPTV", CIRCUITS, COMMUNICATIONS AND SYSTEMS, 2009. PACCS '09. PACIFIC-ASIA CONFERENCE ON, IEEE, PISCATAWAY, NJ, USA, 16 May 2009 (2009-05-16), pages 453-456, XP031526158, ISBN: 978-0-7695-3614-9

## Description

### BACKGROUND

Unless otherwise indicated herein, the materials described in this section are not prior art to the claims in this application and are not admitted to be prior art by inclusion in this section.

Media content such as videos, images, and other visual content provided through wireless networks such as cellular networks are common in daily usage through mobile or stationary devices like smart phones, desktop computers, and similar ones. Such visual and/or audio content may be directly provided by a service provider (e.g., a cellular service provider) or from a third party content provider (e.g., a search engine, a content creator, advertising media etc.) through the wireless network service provider.

Due to the high bandwidth required for transmitting high quality content over networks, many service providers apply optimization and/or transcoding to the content prior to transmission in order to manage the network bandwidth required for transmitting the content over the network to user devices. Typically, as a result of the transcoding and optimization of the content, the quality of the content that is actually received and delivered on the user devices is significantly decreased from the original quality of the content generated by the content provider. The potential reduction in quality of media content may be problematic for content providers who spend significant amounts of time and money on high quality media content and for users desiring to view high quality media content on their various user devices.

US 2008/0066113 A1 discloses a method of measuring video quality. A set top box connected to a video distribution network is configured for storing a sample of the received video data and for transmitting the stored sample to a quality server. The quality server collects the samples received from a plurality of set top boxes for quality analysis. The samples are compared to corresponding reference files, thereby evaluating the quality of the samples received from the set top boxes.

US 2003/0112996 A1 discloses a method of monitoring signal quality based on a predefined watermark that is embedded into the signal. Due to the embedding of the predefined watermark into the signal, a client device receiving the signal is capable of determining host signal quality by its own without further interaction with a server that provides the signal.

US 2009/0154368 A1 discloses a receiver that is capable of measuring a quality of experience guaranteed real-time IP media video quality. The receiver is configured for receiving a transmission video through an IP network service platform and an original video corresponding to the transmission video. A detector unit and a measurement unit evaluate a difference between the transmission video and the corresponding original video.

### SUMMARY

The invention is defined by the independent claims, taking due account of any element which is equivalent to an element specified in the claims. The dependent claims concern optional features of some embodiments of the invention.

The present disclosure generally describes techniques for enhancing user experience in still image or video transmission over a network by detecting transcoding at a content provider and adjusting content delivery based on the detected transcoding for providing optimal viewing on a user device. According to some examples, an example method for determining image quality for images transmitted over service provider networks is described. The example method may include creating visual content for viewing on a user device, transmitting the visual content in a compressible format over a service provider network to the user device, and receiving a sample of the visual content from the user device as delivered on the user device. The example method may also include determining whether the transmitted visual content has been subject to one of transcoding or optimization based on a comparison of the received sample with the originally transmitted visual content.

According to other embodiments, an example server providing for determining image quality over service provider networks is described. The example server may include a communication module adapted to communicate wirelessly with one or more user devices via a service provider network, a memory adapted to store instructions, and a processor coupled to the communication module and the memory. The processor of the example server may be configured to create visual content for viewing on a user device, transmit the visual content in a compressible format over a service provider network to the user device, receive a sample of the visual content from the user device as delivered to the user device, and determine whether the transmitted visual content has been subject to one of transcoding or optimization based on a comparison of the received sample with the originally transmitted visual content.

According to other example embodiments, a computer-readable storage medium may have instructions stored thereon for determining image quality for images transmitted over service provider networks. The instructions may include creating visual content for viewing on a user device, transmitting the visual content in a compressible format over a service provider network to the user device, receiving a sample of the visual content from the user device as delivered on the user device, and determining whether the transmitted visual content has been subject to one of transcoding or optimization based on a comparison of the received sample with the originally transmitted visual content.

According to further embodiments, a computing device for displaying visual content received over service provider networks is described. The computing device may include a communication module adapted to communicate wirelessly with a service provider, a memory adapted to store instructions, and a processor coupled to the communication module and the memory. The processor may be adapted to receive a first visual content in a compressible format from a content provider over a service provider network and transmit a sample of the first visual content as delivered to the computing device over the service provider network. The sample of the first visual content may be employed by the content provider to determine whether the first visual content was subject to one of transcoding or optimization by the service provider network. The processor may also be adapted to receive a second visual content from the content provider over the service provider network, in which the second visual content may have at least one quality aspect adjusted based on the determination, and display the second visual content to a user.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The below described and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings, in which:
FIG. 1 is a diagram of an illustrative example system transmitting visual content to a variety of user devices;
FIG. 2 conceptually illustrates an example system for determining the image quality of visual content transmitted over a service provider to a user device;
FIG. 3 illustrates an example system for transmitting and testing visual content quality over a service provider network;
FIG. 4 illustrates a general purpose computing device, which may be used to implement image quality detection over a service provider network;
FIG. 5 is a flow diagram illustrating an example method that may be performed by a computing device such as device 400 in FIG. 4; and
FIG. 6 illustrates a block diagram of an example computer program product to be used by a server of a content provider,
   all arranged in accordance with at least some embodiments described herein.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented herein. It will be readily understood that the aspects of the present disclosure, as generally described herein, and illustrated in the Figures, can be arranged, substituted, combined, separated, and designed in a wide variety of different configurations, all of which are explicitly contemplated herein.

This disclosure is generally drawn, *inter alia,* to methods, apparatus, systems, devices, and/or computer program products related to enhancing user experience in still image or video transmission over a network by detecting transcoding at a content provider and adjusting content delivery based on the detected transcoding.

Briefly stated, a content provider may deliver visual content to a service provider for transmission over a network to user devices, and may monitor the quality of the visual content that the user devices receive. The service provider may apply transcoding and/or optimization techniques to the visual content during the transmission to user devices possibly causing the quality of the received visual content to be degraded. The content provider may cause a user device to transmit a sample of the received visual content as delivered back to the content provider and compare the sample with the original visual content to evaluate if any transcoding / optimization is applied to the visual content by the service provider network. The content provider may then adjust quality aspects of the visual content based on the evaluation of the sample visual content and may transmit visual content with adjusted quality aspects for optimal display by the user device over the service provider network. Adjusting for quality aspects may include sending a differently coded media content or sending different content more appropriate to the delivered quality.

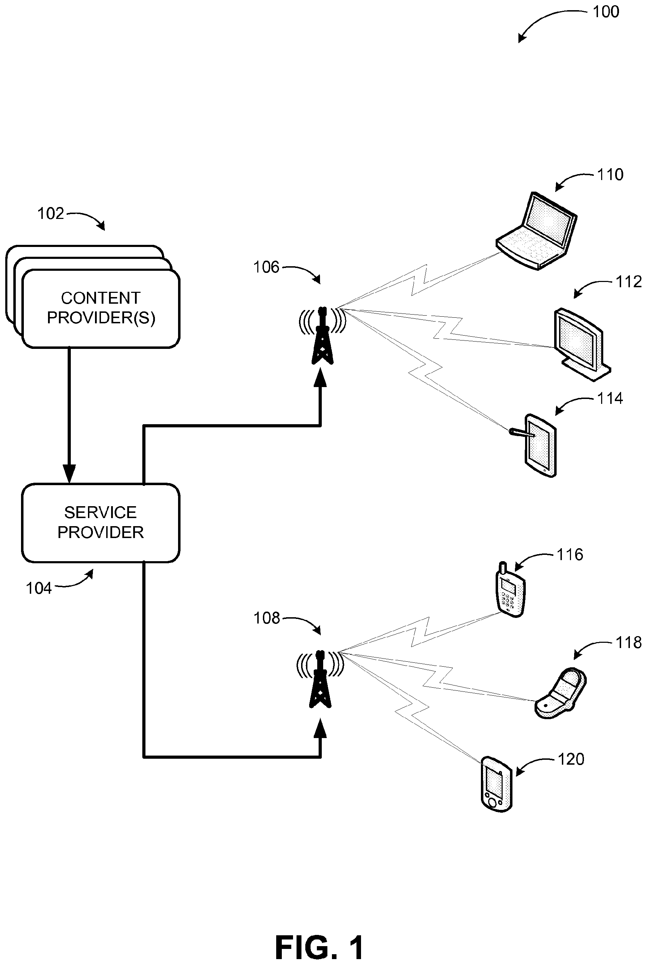

FIG. 1 is an illustrative example system transmitting visual content to a variety of user devices. While video transmission is used in example descriptions herein, embodiments may be implemented in systems transmitting video and/or audio content over wireless networks to mobile and stationary user devices.

Diagram 100 shows a service provider 104 receiving visual content (video/image) from one or more content providers 102. Content providers 102 may be part of the service provider or may be separate entities. For example, service provider 104 may be a cellular service provider, which may generate some of the visual content itself. Other visual content may be received from third party content providers. Service provider 104 may facilitate communications between various user devices and/or transmit visual content to the user devices over one or more networks. The transmission may involve transmission towers, access points, and comparable transceivers (106, 108).

In the example system of diagram 100, the service provider may use transceivers 106 and 108 within a service provider network to communicate wirelessly with user devices such as laptop computer 110, desktop computer 112, portable computer 114, smart phone 116, cellular phone 118, and wireless personal digital assistant (PDA) 120. A user device may include other portable or stationary computing devices, (e.g. a vehicle-mount computing device) capable of wireless communication and playback of received visual content. A service provider network may also be a wired data network, a wireless data network, a cellular network, or a combination of those capable of transmitting content to user devices.

Transmission of visual content to user devices from a service provider and/or content provider over a service provider network may require large network bandwidth due to the size of the high quality visual content being transmitted. Consequently, many service providers may optimize and/or transcode the visual content prior to transmission in order to manage or reduce the network bandwidth used during transmission, resulting in a reduction in the quality of the visual content that is transmitted to the user devices.

A system according to embodiments provides the capability for the content provider 102 to monitor the quality of the visual content that is transmitted over the service provider network and ultimately received on a user device, and to evaluate the optimization and/or transcoding that is applied to the visual content by the service provider during transmission to the user device(s). The content provider 102 may be able to apply universal techniques for evaluating the optimization and/or transcoding applied to the visual content by the service provider and determining the quality of the visual content received on the user devices. From the determination of the quality of the visual content that is received on the user device(s), the content provider 102 may adapt the size, packaging, resolution, timing, content, and similar quality aspects of the visual content that it sends to the service provider network for transmission to the user device(s) to match the quality of service that is received by the user device(s) for optimal viewing of the visual content.

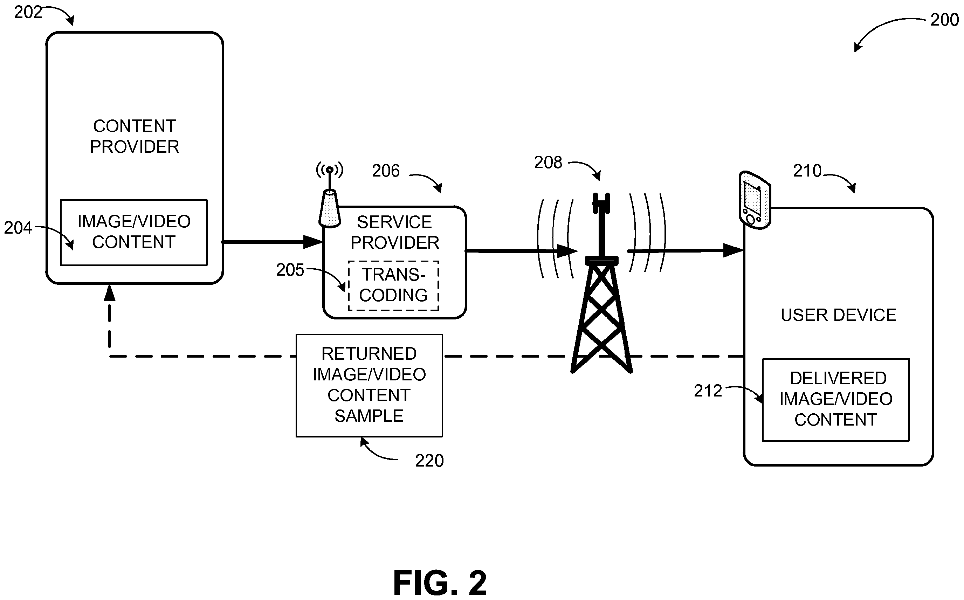

FIG. 2 conceptually illustrates an example system for determining the quality of visual content transmitted over a service provider to a user device, arranged in accordance with at least some embodiments described herein.

Diagram 200 illustrates one example configuration of a system according to some embodiments, where visual content is received from an external content provider 202 at a service provider 206, optimization and/or transcoding 205 is applied to the visual content at the service provider 206 for transmission to a user device and a sample of the delivered visual content from the user device is returned to the content provider.

According to an example scenario, content provider 202 may generate original visual content 204 for ultimate viewing on a user device 210. Original visual content may be a media object, and may be, for example, a still image or a video stream. Service provider 206 (e.g., a cellular service provider) may receive the original visual content 204, which may be in a compressible format, from content provider 202, and may transmit the original visual content 204 via transceiver 208 to user device 210. In an example scenario, the service provider 206 may apply optimization and/or transcoding 205 to the visual content in order to minimize the required bandwidth for transmitting the original visual content 204 to the user device 210. Because transcoding 205 is typically a lossy process resulting in degradation of the quality of the content, when the service provider 206 applies transcoding 205 to the original visual content 204 in order to reduce or compress the file size, the quality of the delivered visual content 212 on the user device may be significantly decreased from the quality of the original visual content 204.

In a system according to embodiments, the content provider 202 may cause user device 210 to transmit back to the content provider a visual content sample 220 of the delivered visual content 212 on the user device 210. The returned visual content sample 220 may be a media object, which may be independent of the hardware and/or software components of the user device 210. In an example embodiment, the returned visual content sample 220 may be an uncompressed or a lossless sample of the delivered visual content 212, such that the content provider 202 may receive an accurate representation of the quality of the visual content received by the user device 210. The content provider 202 may analyze the returned visual content sample 220 to determine whether optimization and/or transcoding 205 was applied to the original visual content 204 by the service provider 206, and may evaluate the quality of the visual content that ultimately reaches the user device 210 over the service provider network. The content provider 202 may compare the returned visual content sample 220 with the original visual content 204. From the comparison the content provider 202 may determine the degree of optimization and/or transcoding applied to the visual content and the quality of the delivered visual content 212 received at the user device 210.

Based on the evaluation of the transcoding applied to the visual content, the content provider 202 may determine an appropriate set of parameters for providing an optimal view of the visual content on the user device 210. The content provider 202 may adjust quality aspects of the generated original visual content 204 to match the determined appropriate quality for the user device based on the evaluation. For example, the content provider 202 may adjust image size, file size, an image resolution, and/or transmission parameters. The content provider 202 may also adjust other quality aspects and/or parameters of the visual content which may affect the quality of the visual content. The quality aspects of the visual content may be optimized to match the visual content quality that the user device 210 actually receives for providing an optimal viewing experience on the user device 210. In another example embodiment, the content provider may select an alternate type of visual content that most appropriately matches the quality of the visual content that the user device receives. The content provider may transmit further visual content with the adjusted quality aspects over the service provider network to the user device 210.

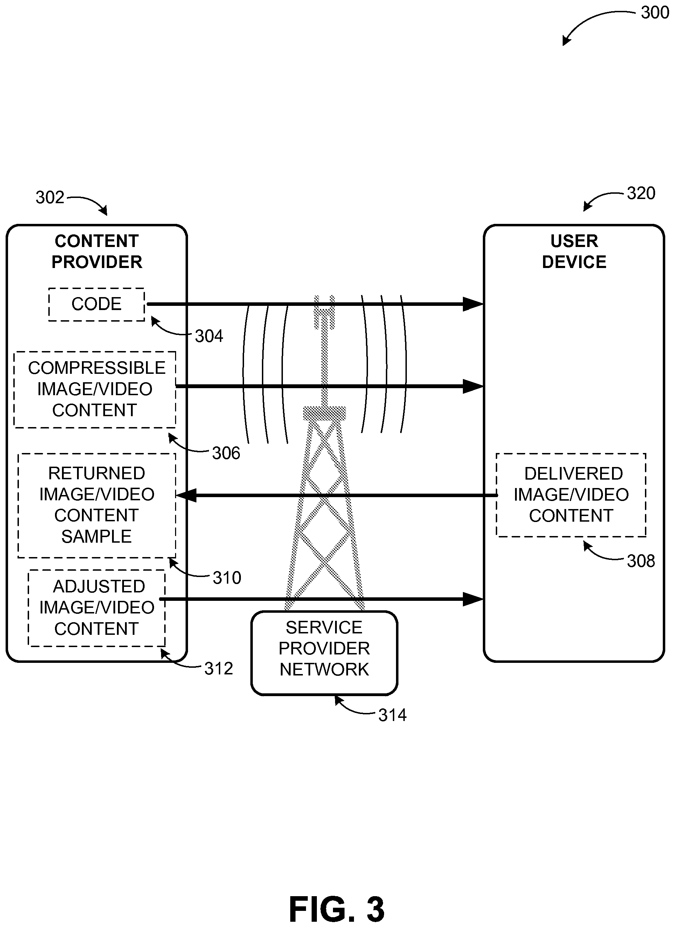

FIG. 3 illustrates an example system for transmitting and testing visual content quality over a service provider network, arranged in accordance with at least some embodiments described herein. In a system according to embodiments, the content provider 302 may provide an approach for transmitting original visual content 306 over a service provider network 314 to a user device 320 and receiving back a returned visual content sample 310 that can be evaluated to determine the quality of the visual content that reaches the user device 320 over the service provider network 314.

As described in conjunction with FIG. 2, the content provider 302 may generate original visual content 306 for transmission over the service provider network 314 to a user device 320. The service provider network 314 may optimize and/or transcode the visual content transmission to the user device 320. The user device 320 may receive the visual content, and due to the transcoding by the service provider network 314, the quality of delivered visual content 308 may be significantly lower the original visual content 306. The content provider 302 may receive a returned visual content sample 310 of the delivered visual content 308 and compare the returned visual content sample 310 with the original visual content. Based on the comparison, the content provider may evaluate the transcoding that was applied to the visual content and determine the quality of visual content that is received at the user device. The visual content comparison may be used to select an appropriate type of visual content to deliver to optimize the viewing experience on the user device given the transcoding that may be applied by the service provider network to the visual content. The content provider may adjust quality aspects of the visual content and may transit the adjusted visual content 312 to the user device 320 for optimal viewing on the user device 320.

In an example scenario shown in diagram 300, in order to facilitate the transmission of the original visual content 306 and the receipt of a returned visual content sample 310, the content provider 302 may generate and deliver code 304 providing for transmission of the original visual content 306 to the user device 320 and sending back a returned visual content sample 310 of the delivered visual content 308 on the user device 320.

An example of the code 304 providing for the transmission of an original visual content and receipt of a returned visual content sample of the delivered visual may be HTML5 compatible language. Using HTML5 language, the code 304 may include a canvas element using the "context.drawlmage()" function to deliver a media object or jpg file, and the code may include the "oCanvas.toDataURL()" function to return a base64 encoded media object or png file of the image as the service provider delivered the visual content and it was delivered on the user device.

In a system according to embodiments, the returned visual content sample 220 may be an uncompressed or a lossless sample of the delivered visual content 308, such that the content provider 302 may receive an accurate representation of the quality of the visual content received by the user device. In some scenarios, the service provider network 314 may transcode the returned visual content sample 310 as it is transmitted over the service provider network 314 back to the content provider 302. In order to prevent detection of the sample as an image by the service provider network 314 and thus transcoding of the returned visual content sample 310, the returned visual content sample 310 may be compressed and/or encrypted prior to transmission back to the content provider 302 from the user device 320. Additionally, the header and a description of the returned visual content sample 310 to may be modified prior to transmission back to the content provider 302 from the user device 320.

In a further embodiment, the content provider 302 may perform initial testing of visual content quality by transmitting preliminary visual content. For example, the original visual content 306 may be preliminary visual content that is transmitted to the user device 320 over the service provider network 314 prior to transmission of the complete visual content. The content provider 302 may transmit the preliminary visual content over the service provider network 314 for initial testing of the quality of visual content received by the user device 320 prior to transmitting complete visual content. In an example embodiment, the preliminary visual content for initial testing may be transmitted to the user device such that it is rendered outside of the viewing display of the user device 320, and as such, is not viewable or detectable by a user.

The preliminary visual content for initial testing may be a small-sized generic test image, or alternatively, the preliminary visual content may be sample image or video extracted from the complete visual content to be transmitted. The content provider 302 may receive a returned visual content sample 310 of the preliminary visual content as it is delivered on the user device 320, and may determine the transcoding applied to the preliminary visual content. The content provider 302 may adjust the quality aspects of the visual content according to the determined transcoding, and subsequently may transmit the complete visual content with adjusted quality aspects for optimal viewing on the user device.

In another example embodiment, when transmitting visual content to user devices that employ parallel or simultaneous uploading, the content provider 302 may initially transmit preliminary visual content for initial testing of the quality of the visual content prior to transmitting the complete visual content. Upon subsequent determination of the appropriate quality of visual content, the content provider 302 may transmit the complete visual content with adjusted quality aspects to the user device for parallel uploading of the visual content.

In a further embodiment, the content provider 302 may determine whether to perform initial testing of visual content quality by sending preliminary visual content over the service provider network 314 based on identification of the service provider. For example, a specific service provider may be previously known to not optimize or transcode transmitted visual content, and therefore, no initial testing or evaluation of the received visual content may be necessary. In another scenario, the content provider may have previously determined the degree and type of optimization and/or transcoding applied by specific service providers, and the content provider may have determined the appropriate visual content type and quality for transmitting over those respective service provider networks.

While embodiments have been discussed above using specific examples, components, scenarios, and configurations in FIG. 1 through FIG. 3, they are intended to provide a general guideline to be used for determining transcoding applied by a service provider network to visual content and adjusting the visual content quality for optimal viewing on a user device. These examples do not constitute a limitation on the embodiments, which may be implemented using other components, frame selection schemes, and configurations using the principles described herein. Furthermore, embodiments may be implemented for content received at stationary or vehicle mount devices, and applicable to audio, video, or comparable content.

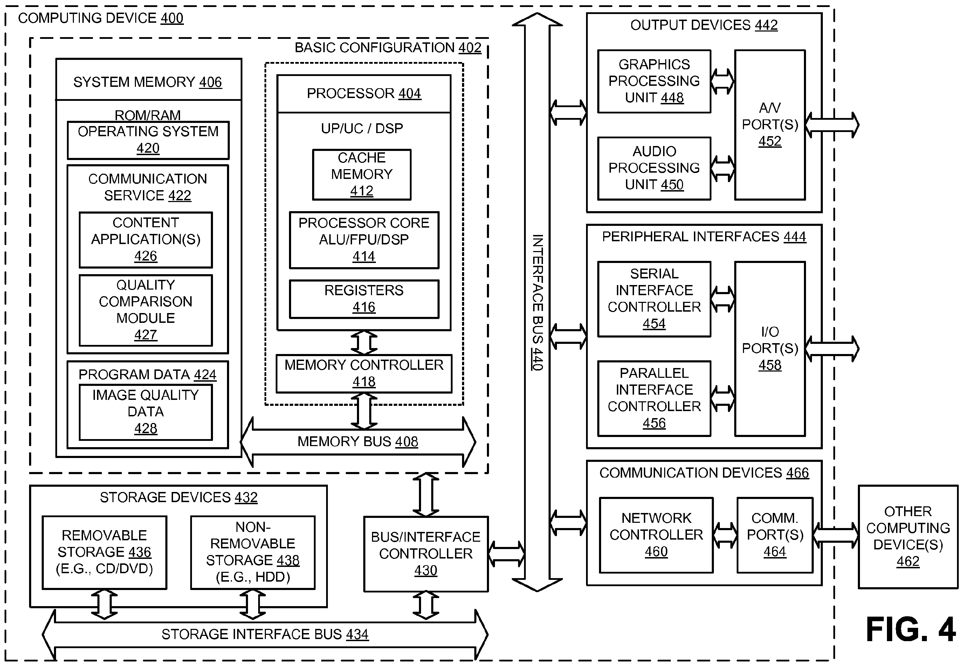

FIG. 4 illustrates a general purpose computing device, which may be used to implement image quality detection over a service provider network, arranged in accordance with at least some embodiments described herein. In a very basic configuration 402, computing device 400 typically includes one or more processors 404 and a system memory 406. A memory bus 408 may be used for communicating between processor 404 and system memory 406.

Depending on the desired configuration, processor 404 may be of any type including but not limited to a microprocessor (µP), a microcontroller (µC), a digital signal processor (DSP), or any combination thereof. Processor 404 may include one more levels of caching, such as a level cache memory 412, a processor core 414, and registers 414. Example processor core 414 may include an arithmetic logic unit (ALU), a floating point unit (FPU), a digital signal processing core (DSP Core), or any combination thereof. An example memory controller 418 may also be used with processor 404, or in some implementations memory controller 415 may be an internal part of processor 404.

Depending on the desired configuration, system memory 406 may be of any type including but not limited to volatile memory (such as RAM), non-volatile memory (such as ROM, flash memory, etc.) or any combination thereof. System memory 406 may include an operating system 420, a communication service 422, one or more content applications 426, and quality comparison module 427. System memory 406 may further include program data 424 and image quality data 428. Communication service 422 may provide audio / visual content to users among other things. Content application(s) 426 may each be associated with a particular type of content to be provided to users. Quality comparison module 427 may compare returned visual content samples with original visual content for determining applied optimization and/or transcoding by the service provider network. Image quality data 428 may be stored in local or remote data stores for subsequent use. This described basic configuration 402 is illustrated in FIG. 4 by those components within the inner dashed line.

Computing device 400 may have additional features or functionality, and additional interfaces to facilitate communications between basic configuration 402 and any required devices and interfaces. For example, a bus/interface controller 430 may be used to facilitate communications between basic configuration 402 and one or more data storage devices 432 via a storage interface bus 434. Data storage devices 432 may be removable storage devices 434, non-removable storage devices 438, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 406, removable storage devices 436 and non-removable storage devices 438 are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computing device 400. Any such computer storage media may be part of computing device 400.

Computing device 400 may also include an interface bus 440 for facilitating communication from various interface devices (e.g., output devices 442, peripheral interfaces 444, and communication devices 666 to basic configuration 402 via bus/interface controller 430. Example output devices 442 include a graphics processing unit 448 and an audio processing unit 450, which may be configured to communicate to various external devices such as a display or speakers via one or more A/V ports 452. Example peripheral interfaces 444 include a serial interface controller 454 or a parallel interface controller 456, which may be configured to communicate with external devices such as input devices (e.g., keyboard, mouse, pen, voice input device, touch input device, etc.) or other peripheral devices (e.g., printer, scanner, etc.) via one or more I/O ports 458. An example communication device 466 includes a network controller 460, which may be arranged to facilitate communications with one or more other computing devices 462 over a network communication link via one or more communication ports 464.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

Computing device 400 may be implemented as a portion of a physical server, virtual server, a computing cloud, or a hybrid device that include any of the above functions. Computing device 400 may also be implemented as a personal computer including both laptop computer and non-laptop computer configurations. Moreover computing device 400 may be implemented as a networked system or as part of a general purpose or specialized server.

Networks for a networked system including computing device 400 may comprise any topology of servers, clients, switches, routers, modems, Internet service providers, and any appropriate communication media (e.g., wired or wireless communications). A system according to embodiments may have a static or dynamic network topology. The networks may include a secure network such as an enterprise network (e.g., a LAN, WAN, or WLAN), an unsecure network such as a wireless open network (e.g., IEEE 802.11 wireless networks), or a world-wide network such (e.g., the Internet). The networks may also comprise a plurality of distinct networks that are adapted to operate together. Such networks are configured to provide communication between the nodes described herein. By way of example, and not limitation, these networks may include wireless media such as acoustic, RF, infrared and other wireless media. Furthermore, the networks may be portions of the same network or separate networks.

Example embodiments may also include methods. These methods can be implemented in any number of ways, including the structures described herein. One such way is by machine operations, of devices of the type described in the present disclosure. Another optional way is for one or more of the individual operations of the methods to be performed in conjunction with one or more human operators performing some of the operations while other operations are performed by machines. These human operators need not be collocated with each other, but each can be only with a machine that performs a portion of the program. In other examples, the human interaction can be automated such as by pre-selected criteria that are machine automated.

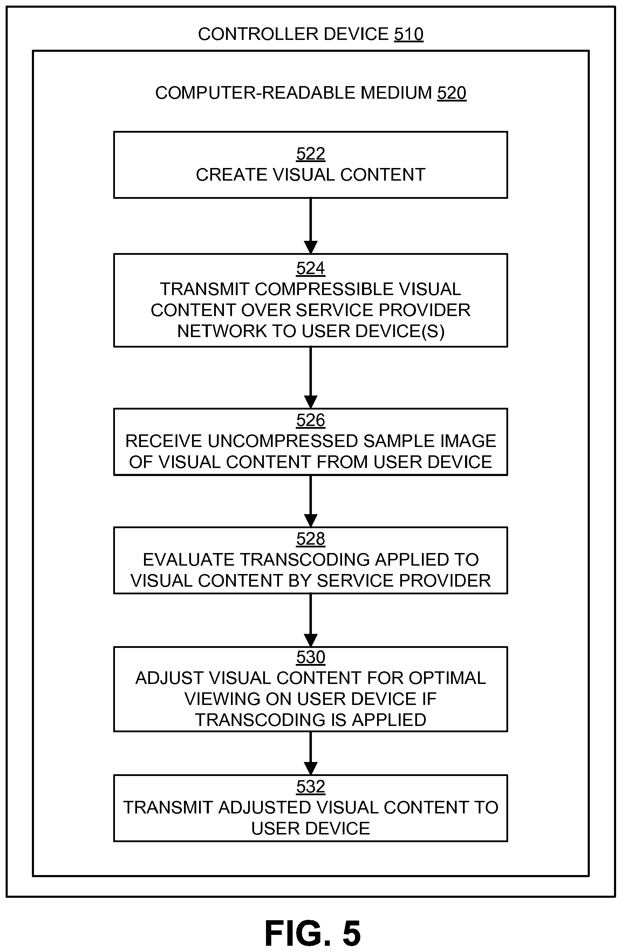

FIG. 5 is a flow diagram illustrating an example method that may be performed by a computing device such as device 400 in FIG. 4, arranged in accordance with at least some embodiments described herein.

An example process according to embodiments may begin with operation 522, "CREATE VISUAL CONTENT", where a content provider may generate visual content, including video streams and still images for transmission to user devices. Operation 522 may be followed by operation 524, "TRANSMIT COMPRESSIBLE VISUAL CONTENT OVER SERVICE PROVIDER NETWORK TO USER DEVICE(S)", where the content provider may transmit the visual content in a compressible format over the service provider network to one or more user devices over one or more wireless networks. The user device(s) may receive the visual content for displaying on the interface of the user device. Operation 524 may be followed by operation 526, "RECEIVE UNCOMPRESSED SAMPLE IMAGE OF VISUAL CONTENT FROM USER DEVICE", where the content provider may receive a sample of the visual content from the user device, which may be an uncompressed or lossless sample of the visual content, as it is delivered on the user device.

Operation 526 may be followed by operation 528, "EVALUATE TRANSCODING APPLIED TO VISUAL CONTENT BY SERVICE PROVIDER", where the content provider may compare the received visual content sample with the originally transmitted visual content and may determine whether the transmitted visual content has been subject to transcoding and/or optimization based on the comparison. The content provider may evaluate the transcoding and/or optimization applied to the visual content by the service provider network. At subsequent operation 530, "ADJUST VISUAL CONTENT FOR OPTIMAL VIEWING ON USER DEVICE IF TRANSCODING IS APPLIED", the content provider may adjust one or more quality aspects of the visual content based on the evaluation of the visual content. Operation 530 may be followed by operation 532, "TRANSMIT ADJUSTED VISUAL CONTENT TO USER DEVICE", where the content provider may transmit further visual content with adjusted quality aspects for optimal display over the service provider network to user device(s).

The operations included in the processes of FIG. 5 described above are for illustration purposes. Detection of transcoding and optimization of transmitted visual content by service providers and adjustment of the visual content for optimal display may be implemented by similar processes with fewer or additional operations. In some examples, the operations may be performed in a different order. In some other examples, various operations may be eliminated. In still other examples, various operations may be divided into additional operations, or combined together into fewer operations. Although illustrated as sequentially ordered operations, in some implementations the various operations may be performed in a different order, or in some cases various operations may be performed at substantially the same time.

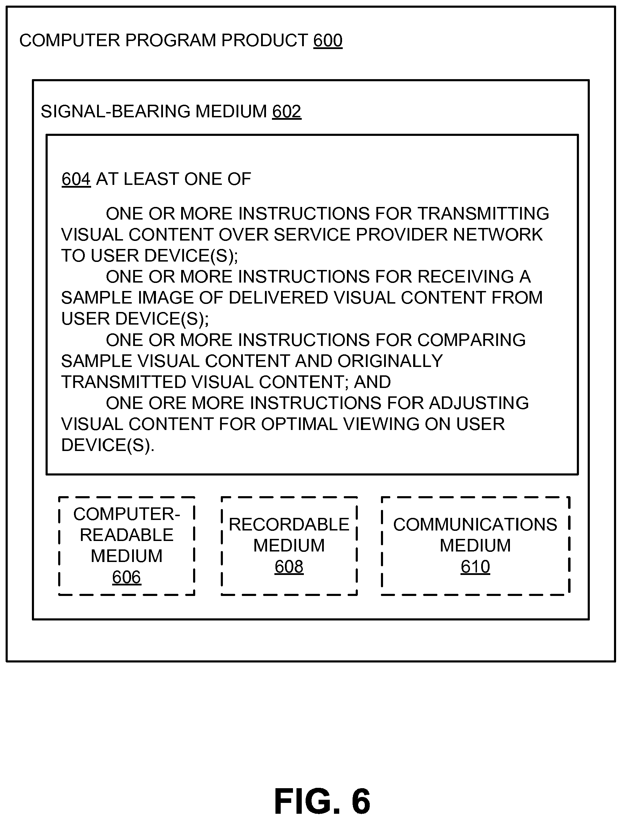

FIG. 6 illustrates a block diagram of an example computer program product to be used by a server of a content provider, arranged in accordance with at least some embodiments described herein.

In some examples, as shown in FIG. 6, computer program product 600 may include a signal bearing medium 602 that may also include machine readable instructions 604 that, when executed by, for example, a processor, may provide the functionality described above with respect to FIG 1 through FIG. 3. Thus, for example, referring to processor 404, one or more of the tasks shown in FIG. 6 may be undertaken in response to instructions 604 conveyed to the processor 404 by medium 602 to perform actions associated with computation of mobile content quality of experience in real-time as described herein. Some of those instructions may include transmitting visual content over service provider network(s) to user device(s), receiving a sample image of delivered visual content from user device(s), comparing sample visual content and originally transmitted visual content, and adjust visual content for optimal viewing on user device(s).

In some implementations, signal bearing medium 602 depicted in FIG. 6 may encompass a computer-readable medium 606, such as, but not limited to, a hard disk drive, a Compact Disc (CD), a Digital Versatile Disk (DVD), a digital tape, memory, etc. In some implementations, signal bearing medium 602 may encompass a recordable medium 608, such as, but not limited to, memory, read/write (R/W) CDs, R/W DVDs, etc. In some implementations, signal bearing medium 602 may encompass a communications medium 610, such as, but not limited to, a digital and/or an analog communication medium (e.g., a fiber optic cable, a waveguide, a wired communications link, a wireless communication link, etc.). Thus, for example, computer program product 600 may be conveyed to the processor 604 by an RF signal bearing medium 602, where the signal bearing medium 602 is conveyed by a wireless communications medium 610 (e.g., a wireless communications medium conforming with the IEEE 802.11 standard).

While FIG. 6 is described using visual content as example for transcoding detection and content adjustment, the principles described herein apply to still images, audio, and similar content as well. Moreover, tasks performed in response to the instructions may be shared among service providers, content providers, and user devices in various combinations.

According to some examples, the present disclosure describes a method for determining image quality for images transmitted over service provider networks. The method may include creating visual content for viewing on a user device, transmitting the visual content in a compressible format over a service provider network to the user device, receiving a sample of the visual content from the user device as delivered on the user device, and determining whether the transmitted visual content has been subject to one of transcoding or optimization based on a comparison of the received sample with the originally transmitted visual content.

According to other examples of a method for determining image quality for images transmitted over service provider networks, the visual content may be one of a still image and a video stream.

According to other examples, the method may also include evaluating the optimization and/or transcoding applied to the visual content by the service provider network, adjusting quality aspects of the visual content based on the evaluation, and transmitting further visual content with adjusted quality aspects.

According to other examples of a method for determining image quality for images transmitted over service provider networks, the visual content may be preliminary visual content transmitted prior to transmission of the further content requested by a user.

According to other examples of a method for determining image quality for images transmitted over service provider networks, the preliminary visual content may be received on the user device without being detected by the user.

According to other examples of a method for determining image quality for images transmitted over service provider networks, the visual content may be part of the further content requested by a user.

According to further examples of a method for determining image quality for images transmitted over service provider networks, adjusting quality aspects of the visual content may include adjusting one of an image size, a file size, an image resolution, and a transmission parameter.

According to further examples, the method may also include adjusting quality aspects of the visual content based on an identification of the service provider.

According to yet other examples of a method for determining image quality for images transmitted over service provider networks, the received sample of the visual content may be a media object.

According to other examples of a method for determining image quality for images transmitted over service provider networks, the media object may be independent of a hardware and a software component of the user device.

According to other examples, the method may also include causing the sample of the visual content to be compressed and/or encrypted prior to transmission from the user device, and/or causing a header and a description of the sample of the visual content to be modified prior to transmission from the user device in order to prevent detection of the sample as an image by the service provider network.

According to further examples of a method for determining image quality for images transmitted over service provider networks, the service provider network may be one or more of a wired data network, a wireless data network, and/or a cellular network.

According to further examples of a method for determining image quality for images transmitted over service provider networks, the user device may be one of: a portable computing device, a vehicle-mount computing device, a stationary computing device, or a smart phone.

According to yet other examples, the present disclosure describes a server providing for determining image quality over service provider networks. The server may include a communication module adapted to communicate wirelessly with one or more user devices via a service provider network, a memory adapted to store instructions, and a processor coupled to the communication module and the memory. The processor may be adapted to create visual content for viewing on a user device, transmit the visual content in a compressible format over a service provider network to the user device, receive a sample of the visual content from the user device as delivered on the user device, and determine whether the transmitted visual content has been subject to one of transcoding or optimization based on a comparison of the received sample with the originally transmitted visual content.

According to other examples of a method for determining image quality over service provider networks, the visual content may be one of a still image and a video stream.

According to other examples of a method for determining image quality over service provider networks, the processor may be further adapted to evaluate the optimization and/or transcoding applied to the visual content by the service provider network, adjust quality aspects of the visual content based on the evaluation, and transmit further visual content with adjusted quality aspects.

According to yet other examples of a method for determining image quality over service provider networks, the visual content may be preliminary visual content transmitted prior to transmission of the further content requested by a user.

According to yet other examples of a method for determining image quality over service provider networks, the preliminary visual content may be received on the user device without being detected by the user.

According to other examples of a method for determining image quality over service provider networks, the visual content may be part of the further content requested by a user.

According to yet other examples of a method for determining image quality over service provider networks, adjusting quality aspects of the visual may include adjusting one of an image size, a file size, an image resolution, and a transmission parameter.

According to other examples of a method for determining image quality over service provider networks, the processor may be further adapted to adjust quality aspects of the visual content based on an identification of the service provider.

According to other examples of a method for determining image quality over service provider networks, the received sample of the visual content may be a media object.

According to further examples of a method for determining image quality over service provider networks, the media object may be independent of a hardware and a software component of the user device.

According to further examples of a method for determining image quality over service provider networks, the processor may be further adapted to cause the sample of the visual content to be compressed prior to transmission from the user device, and/or cause a header and a description of the sample of the visual content to be modified prior to transmission from the user device in order to prevent detection of the sample as an image by the service provider network.

According to further examples of a method for determining image quality over service provider networks, the service provider network may be one or more of a wired data network, a wireless data network, and/or a cellular network.

According to further examples, the present disclosure describes a computer-readable storage medium with instructions stored thereon for determining image quality for images transmitted over service provider networks. The instructions may include creating visual content for viewing on a user device, transmitting the visual content in a compressible format over a service provider network to the user device, receiving a sample of the visual content from the user device as delivered on the user device, and determining whether the transmitted visual content has been subject to one of transcoding or optimization based on a comparison of the received sample with the originally transmitted visual content.

According to other examples of computer-readable storage medium with instructions stored thereon for determining image quality for images transmitted over service provider networks, the visual content may be one of a still image and a video stream.

According to other examples of computer-readable storage medium with instructions stored thereon for determining image quality for images transmitted over service provider networks, the instructions may further include evaluating the optimization and/or transcoding applied to the visual content by the service provider network, adjusting quality aspects of the visual content based on the evaluation, and transmitting further visual content with adjusted quality aspects.

According to other examples of computer-readable storage medium with instructions stored thereon for determining image quality for images transmitted over service provider networks, the visual content may be preliminary visual content transmitted prior to transmission of the further content requested by a user.

According to other examples of computer-readable storage medium with instructions stored thereon for determining image quality for images transmitted over service provider networks, the preliminary visual content may be rendered on the user device without being detected by the user.

According to other examples of computer-readable storage medium with instructions stored thereon for determining image quality for images transmitted over service provider networks, the visual content may be part of the further content requested by a user.

According to other examples of computer-readable storage medium with instructions stored thereon for determining image quality for images transmitted over service provider networks, adjusting quality aspects of the visual content may include adjusting one of an image size, a file size, an image resolution, and a transmission parameter.

According to other examples of computer-readable storage medium with instructions stored thereon for determining image quality for images transmitted over service provider networks, the instructions may further include adjusting quality aspects of the visual content based on an identification of the service provider.

According to other examples of computer-readable storage medium with instructions stored thereon for determining image quality for images transmitted over service provider networks, the received sample of the visual content may be a media object.

According to yet other examples of computer-readable storage medium with instructions stored thereon for determining image quality for images transmitted over service provider networks, the media object may be independent of a hardware and a software component of the user device.

According to further examples of computer-readable storage medium with instructions stored thereon for determining image quality for images transmitted over service provider networks, the instructions may further include causing the sample of the visual content to be compressed prior to transmission from the user device, and/or causing a header and a description of the sample of the visual content to be modified prior to transmission from the user device in order to prevent detection of the sample as an image by the service provider network.

According to further examples of computer-readable storage medium with instructions stored thereon for determining image quality for images transmitted over service provider networks, the service provider network may be one or more of a wired data network, a wireless data network, and/or a cellular network.

According to further examples of computer-readable storage medium with instructions stored thereon for determining image quality for images transmitted over service provider networks, the user device may be one of: a portable computing device, a vehicle-mount computing device, a stationary computing device, or a smart phone.

According to further examples, the present disclosure describes a computing device for displaying visual content received over service provider networks. The computing device may include a communication module adapted to communicate wirelessly with a service provider, a memory adapted to store instructions, and a processor coupled to the communication module and the memory. The processor may be adapted to receive a first visual content in a compressible format from a content provider over a service provider network, transmit a sample of the first visual content as delivered to the content provider over the service provider network, wherein the sample of the first visual content is employed by the content provider to determine whether the first visual content was subject to one of transcoding or optimization by the service provider network, receive a second visual content from the content provider over the service provider network, wherein the second visual content has at least one quality aspect adjusted based on the determination, and display the second visual content to a user.

According to other examples of a computing device for displaying visual content received over service provider networks, the first visual content may be one of: a small-sized generic test image or a sample image from the second visual content to be transmitted.

According to other examples of a computing device for displaying visual content received over service provider networks, the first visual content may be rendered outside a viewing area of a display without being detected by the user.

According to further examples of a computing device for displaying visual content received over service provider networks, the adjusted at least one quality aspect of the second visual content may include one of an image size, a file size, an image resolution, and a transmission parameter.

According to further examples of a computing device for displaying visual content received over service provider networks, the processor may be further adapted to compress or encrypt the sample of the first visual content prior to transmission to the content provider, and/or modify a header and a description of the sample of the first visual content to transmission to the content provider in order to prevent detection of the sample as an image by the service provider network.

According to further examples of a computing device for displaying visual content received over service provider networks, the service provider network may be one or more of a wired data network, a wireless data network, and/or a cellular network.

According to further examples of a computing device for displaying visual content received over service provider networks, the computing device may be one of: a portable computing device, a vehicle-mount computing device, a stationary computing device, or a smart phone.

There is little distinction left between hardware and software implementations of aspects of systems; the use of hardware or software is generally (but not always, in that in certain contexts the choice between hardware and software may become significant) a design choice representing cost vs. efficiency tradeoffs. There are various vehicles by which processes and/or systems and/or other technologies described herein may be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g. as one or more programs running on one or more microprocessors), as firmware, or as virtually any combination thereof, and that designing the circuitry and/or writing the code for the software and or firmware would be well within the skill of one of skill in the art in light of this disclosure.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds compositions or biological systems, which can, of course, vary. It is also to be understood that the terminology used herein is for the purpose of describing particular embodiments only, and is not intended to be limiting.

In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Versatile Disk (DVD), a digital tape, a computer memory, etc.; and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity of gantry systems; control motors for moving and/or adjusting components and/or quantities).

A typical data processing system may be implemented utilizing any suitable commercially available components, such as those typically found in data computing/communication and/or network computing/communication systems. The herein described subject matter sometimes illustrates different components contained within, or connected with, different other components. It is to be understood that such depicted architectures are merely exemplary, and that in fact many other architectures may be implemented which achieve the same functionality. In a conceptual sense, any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable", to each other to achieve the desired functionality. Specific examples of operably couplable include but are not limited to physically connectable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

## Claims

1. A method for determining image quality for images transmitted over service provider networks (314), the method comprising:
creating (522) visual content (204, 306) for viewing on a user device (110, 112, 114, 116, 118, 120, 210, 320);
transmitting (524) the visual content (204, 306) in a compressible format over a service provider network (314) to the user device (110, 112, 114, 116, 118, 120, 210, 320);
receiving (526) a sample (220, 310) of the visual content from the user device (110, 112, 114, 116, 118, 120, 210, 320) as delivered on the user device (110, 112, 114, 116, 118, 120, 210, 320);
determining whether the transmitted visual content (212, 308) has been subject to one of transcoding or optimization based on a comparison of the received sample (220, 310) with the originally transmitted visual content (204, 306);
evaluating (528) the optimization and/or transcoding applied to the visual content (220, 310) by the service provider network (314);
adjusting (530) quality aspects of the visual content (204, 306) based on the evaluation;
transmitting (532) further visual content (312) with adjusted quality aspects;
wherein the visual content (204, 306) is preliminary visual content transmitted prior to transmission of the further content requested by the user; and
wherein the preliminary visual content is rendered outside of a viewing display of the user device (110, 112, 114, 116, 118, 120, 210, 320) without being detectable by the user.

2. The method according to claim 1, wherein the visual content (204, 306) is one of a still image and a video stream.

3. The method according to claim 1, wherein the visual content (204, 306) is part of the further content requested by a user.

4. The method according to claim 1, wherein adjusting (530) quality aspects of the visual content (204, 306) includes adjusting one of an image size, a file size, an image resolution, and a transmission parameter.

5. The method according to claim 1, further comprising:
adjusting quality aspects of the visual content (204, 306) based on an identification of the service provider (104, 206).

6. The method according to claim 1, wherein the received sample (220, 310) of the visual content is a media object.

7. The method according to claim 6, wherein the media object is independent of a hardware and a software component of the user device.

8. The method according to any of claims 1-7, further comprising:
causing the sample (220, 310) of the visual content to be compressed prior to transmission from the user device (110, 112, 114, 116, 118, 120, 210, 320).

9. The method according to any of claims 1-8, further comprising:
causing a header and a description of the sample (220, 310) of the visual content to be modified prior to transmission from the user device (110, 112, 114, 116, 118, 120, 210, 320) in order to prevent detection of the sample (220, 310) as an image by the service provider network (314).

10. The method according to any of claims 1-9,
wherein the service provider network (314) is one or more of a wired data network, a wireless data network, and/or a cellular network.

11. The method according to any of claims 1-10,
wherein the user device (110, 112, 114, 116, 118, 120, 210, 320) is one of: a portable computing device (110, 114), a vehicle-mount computing device, a stationary computing device (112), or a smart phone (116).

12. A server (400) providing for determining image quality over service provider networks (314), the server (400) comprising:
a communication module (466) adapted to communicate wirelessly with one or more user devices (110, 112, 114, 116, 118, 120, 210, 320) via a service provider network (314);
a memory (406) adapted to store instructions; and
a processor (404) coupled to the communication module (466) and the memory (406), the processor (404) adapted to perform the steps recited in any of claims 1-11.

13. A computer-readable storage medium (520, 600, 602, 604, 606, 608, 610) with instructions stored thereon for determining image quality for images transmitted over service provider networks (314), the instructions comprising instructions for performing the steps recited in any of claims 1-11.

14. A computing device (110, 112, 114, 116, 118, 120, 210, 320) for displaying visual content received over service provider networks (314), the computing device (110, 112, 114, 116, 118, 120, 210, 320) comprising:
a communication module adapted to communicate wirelessly with a service provider (104, 206);
a memory adapted to store instructions;
a processor coupled to the communication module and the memory, the processor adapted to:
receive a first visual content in a compressible format from a content provider (102, 202, 302) over a service provider network (314);
compress a sample of the first visual content;
modify a header and a description of the sample of the first visual content in order to prevent detection of the sample as an image by the service provider network (314);
transmit (220) the sample of the first visual content as delivered to the content provider (102, 202) over the service provider network (314), wherein the sample of the first visual content is employed by the content provider (102, 202) to determine whether the first visual content was subject to one of transcoding or optimization by the service provider network (314);
receive a second visual content from the content provider (102, 202) over the service provider network (314), wherein the second visual content has at least one quality aspect adjusted based on the determination; and
display the second visual content to a user; and
wherein the first visual content (204, 306) is preliminary visual content transmitted prior to transmission of the second content requested by the user; and
wherein the preliminary visual content is rendered outside of a viewing display of the computing device (110, 112, 114, 116, 118, 120, 210, 320) without being detectable by the user.

15. The computing device according to claim 14,
wherein the first visual content is one of: a small-sized generic test image or a sample image from the second visual content to be transmitted.

## Patentansprüche

1. Verfahren zum Bestimmen einer Bildqualität für über Dienstanbieternetzwerke (314) übertragene Bilder, wobei das Verfahren umfasst:
Erzeugen (522) von visuellem Inhalt (204, 306) zum Betrachten auf einem Benutzergerät (110, 112, 114, 116, 118, 120, 210, 320);
Übertragen (524) des visuellen Inhaltes (204, 306) in einem komprimierbaren Format über ein Dienstanbieternetzwerk (314) an das Benutzergerät (110, 112, 114, 116, 118, 120, 210, 320);
Empfangen (526) einer Probe (220, 310) des visuellen Inhaltes von dem Benutzergerät (110, 112, 114, 116, 118, 120, 210, 320) wie dem Benutzergerät (110, 112, 114, 116, 118, 120, 210, 320) zugestellt;
Bestimmen, ob der übertragene visuelle Inhalt (212, 308) einer Transkodierung oder Optimierung basierend auf einem Vergleich der empfangenen Probe (220, 310) mit dem ursprünglich übertragenen visuellen Inhalt (204, 306) unterworfen worden ist;
Auswerten (528) der Optimierung und/oder Transkodierung, die auf den visuellen Inhalt (220, 310) durch das Dienstanbieternetzwerk (314) angewendet wird;
Anpassen (530) von Qualitätsaspekten des visuellen Inhaltes (204, 306) basierend auf dem Auswerten;
Übertragen (532) weiterer visueller Inhalte (312) mit angepassten Qualitätsaspekten;
wobei der visuelle Inhalt (204, 306) vorläufiger visueller Inhalt ist, der vor der Übertragung des von dem Benutzer angeforderten weiteren Inhaltes übertragen wird; und
wobei der vorläufige visuelle Inhalt außerhalb einer Betrachtungsanzeige des Benutzergerätes (110, 112, 114, 116, 118, 120, 210, 320) ohne Erkennbarkeit durch den Benutzer wiedergegeben wird.

2. Verfahren nach Anspruch 1, wobei der visuelle Inhalt (204, 306) ein Standbild oder ein Videostrom ist.

3. Verfahren nach Anspruch 1, wobei der visuelle Inhalt (204, 306) Teil des von einem Benutzer angeforderten weiteren Inhaltes ist.

4. Verfahren nach Anspruch 1, wobei das Anpassen (530) von Qualitätsaspekten des visuellen Inhaltes (204, 306) ein Anpassen einer Bildgröße, einer Dateigröße, einer Bildauflösung oder eines Übertragungsparameters umfasst.

5. Verfahren nach Anspruch 1, ferner umfassend:
Anpassen von Qualitätsaspekten des visuellen Inhaltes (204, 306) basierend auf einer Identifikation des Dienstanbieters (104, 206).

6. Verfahren nach Anspruch 1, wobei die empfangene Probe (220, 310) des visuellen Inhaltes ein Medienobjekt ist.

7. Verfahren nach Anspruch 6, wobei das Medienobjekt unabhängig von einer Hardware und einer Softwarekomponente des Benutzergerätes ist.

8. Verfahren nach einem der Ansprüche 1-7, ferner umfassend:
Veranlassen, dass die Probe (220, 310) des visuellen Inhaltes komprimiert wird vor der Übertragung von dem Benutzergerät (110, 112, 114, 116, 118, 120, 210,320).

9. Verfahren nach einem der Ansprüche 1-8, ferner umfassend:
Veranlassen, dass ein Header und eine Beschreibung der Probe (220, 310) des visuellen Inhaltes modifiziert wird vor der Übertragung von dem Benutzergerät (110, 112, 114, 116, 118, 120, 210, 320), um eine Erkennung der Probe (220, 310) durch das Dienstanbieternetzwerk (314) als ein Bild zu verhindern.

10. Verfahren nach einem der Ansprüche 1-9,
wobei das Dienstanbieternetzwerk (314) ein drahtgebundenes Datennetzwerk und/oder ein drahtloses Datennetzwerk und/oder ein Mobilfunknetz ist.

11. Verfahren nach einem der Ansprüche 1-10,
wobei das Benutzergerät (110, 112, 114, 116, 118, 120, 210, 320) ein tragbares Datenverarbeitungsgerät (110, 114), ein fahrzeugmontiertes Datenverarbeitungsgerät, ein stationäres Datenverarbeitungsgerät (112) oder ein Smartphone (116) ist.

12. Server (400), der ein Bestimmen einer Bildqualität über Dienstanbieternetzwerke (314) anbietet, wobei der Server (400) umfasst:
ein Kommunikationsmodul (466), das dazu eingerichtet ist, drahtlos mit einem oder mehreren Benutzergeräten (110, 112, 114, 116, 118, 120, 210, 320) über ein Dienstanbieternetzwerk (314) zu kommunizieren;
einen Speicher (406), der dazu eingerichtet ist, Anweisungen zu speichern; und
einen Prozessor (404), der mit dem Kommunikationsmodul (466) und dem Speicher (406) gekoppelt ist, wobei der Prozessor (404) dazu eingerichtet ist, die in jedem der Ansprüche 1-11 genannten Schritte auszuführen.

13. Computerlesbares Speichermedium (520, 600, 602, 604, 606, 608, 610) mit darauf gespeicherten Anweisungen zum Bestimmen einer Bildqualität für über Dienstanbieternetzwerke (314) übertragene Bilder, wobei die Anweisungen Anweisungen zum Ausführen der in jedem der Ansprüche 1-11 genannten Schritte umfassen.

14. Datenverarbeitungsgerät (110, 112, 114, 116, 118, 120, 210, 320) zum Anzeigen visueller Inhalte, die über Dienstanbieternetzwerke (314) empfangen werden, wobei das Datenverarbeitungsgerät (110, 112, 114, 116, 118, 120, 210, 320) umfasst:
ein Kommunikationsmodul, das dazu eingerichtet ist, drahtlos mit einem Dienstanbieter (104, 206) zu kommunizieren;
ein Speicher, der dazu eingerichtet ist, Anweisungen zu speichern;
einen Prozessor, der mit dem Kommunikationsmodul und dem Speicher gekoppelt ist, wobei der Prozessor dazu eingerichtet ist zum:
Empfangen eines ersten visuellen Inhaltes in einem komprimierbaren Format von einem Inhaltsanbieter (102, 202, 302) über ein Dienstanbieternetzwerk (314);
Komprimieren einer Probe des ersten visuellen Inhaltes;
Modifizieren eines Headers und einer Beschreibung der Probe des ersten visuellen Inhaltes, um eine Erkennung der Probe durch das Dienstanbieternetzwerk (314) als ein Bild zu verhindern;
Übertragen (220) der Probe des ersten visuellen Inhaltes wie dem Inhaltsanbieter (102, 202) über das Dienstanbieternetzwerk (314) zugestellt, wobei die Probe des ersten visuellen Inhaltes vom Inhaltsanbieter (102, 202) verwendet wird, um zu bestimmen, ob der erste visuelle Inhalt einer Transkodierung oder Optimierung durch das Dienstanbieternetzwerk (314) unterworfen wurde;
Empfangen eines zweiten visuellen Inhaltes vom Inhaltsanbieter (102, 202) über das Dienstanbieternetzwerk (314), wobei der zweite visuelle Inhalt mindestens einen Qualitätsaspekt aufweist, der basierend auf der Bestimmung angepasst ist; und
Anzeigen des zweiten visuellen Inhaltes einem Benutzer; und wobei der erste visuelle Inhalt (204, 306) vorläufiger visueller Inhalt ist, der vor der Übertragung des von dem Benutzer angeforderten zweiten Inhaltes übertragen wird; und wobei der vorläufige visuelle Inhalt außerhalb einer Betrachtungsanzeige des Datenverarbeitungsgerätes (110, 112, 114, 116, 118, 120, 210, 320) ohne Erkennbarkeit durch den Benutzer wiedergegeben wird.

15. Datenverarbeitungsgerät nach Anspruch 14,
wobei der erste visuelle Inhalt ein kleinformatiges generisches Testbild oder ein Musterbild aus dem zu übertragenden zweiten visuellen Inhalt ist.

## Revendications

1. Un procédé de détermination d'une qualité d'image pour des images transmises par l'intermédiaire de réseaux de fournisseurs de services (314), le procédé comprenant :
la création (522) d'un contenu visuel (204, 306) destiné à une visualisation sur un dispositif d'utilisateur (110, 112, 114, 116, 118, 120, 210, 320),
la transmission (524) du contenu visuel (204, 306) dans un format compressible par l'intermédiaire d'un réseau de fournisseur de services (314) au dispositif d'utilisateur (110, 112, 114, 116, 118, 120, 210, 320),
la réception (526) d'un échantillon (220, 310) du contenu visuel à partir du dispositif d'utilisateur (110, 112, 114, 116, 118, 120, 210, 320) tel que remis au dispositif d'utilisateur (110, 112, 114, 116, 118, 120, 210, 320),
la détermination si le contenu visuel transmis (212, 308) a été soumis à une opération parmi un transcodage ou une optimisation en fonction d'une comparaison de l'échantillon reçu (220, 310) au contenu visuel initialement transmis (204, 306),
l'évaluation (528) de l'optimisation et/ou du transcodage appliqué au contenu visuel (220, 310) par le réseau de fournisseur de services (314),
l'ajustement (530) d'aspects de qualité du contenu visuel (204, 306) en fonction de l'évaluation,
la transmission (532) d'un autre contenu visuel (312) avec des aspects de qualité ajustés,
dans lequel le contenu visuel (204, 306) est le contenu visuel préliminaire transmis avant la transmission de l'autre contenu demandé par l'utilisateur, et
dans lequel le contenu visuel préliminaire est rendu en dehors d'un écran de visualisation du dispositif d'utilisateur (110, 112, 114, 116, 118, 120, 210, 320) sans être détectable par l'utilisateur.

2. Le procédé selon la Revendication 1, dans lequel le contenu visuel (204, 306) est un élément parmi une image fixe et un flux vidéo.

3. Le procédé selon la Revendication 1, dans lequel le contenu visuel (204, 306) fait partie de l'autre contenu demandé par un utilisateur.

4. Le procédé selon la Revendication 1, dans lequel l'ajustement (530) d'aspects de qualité du contenu visuel (204, 306) comprend l'ajustement d'un élément parmi une taille d'image, une taille de fichier, une résolution d'image et un paramètre de transmission.

5. Le procédé selon la Revendication 1, comprenant en outre :
l'ajustement d'aspects de qualité du contenu visuel (204, 306) en fonction d'une identification du fournisseur de services (104, 206).

6. Le procédé selon la Revendication 1, dans lequel l'échantillon reçu (220, 310) du contenu visuel est un objet multimédia.

7. Le procédé selon la Revendication 6, dans lequel l'objet multimédia est indépendant d'un composant logiciel et matériel du dispositif d'utilisateur.

8. Le procédé selon l'une quelconque des Revendications 1 à 7, comprenant en outre :
l'opération consistant à amener l'échantillon (220, 310) du contenu visuel à être compressé avant la transmission à partir du dispositif d'utilisateur (110, 112, 114, 116, 118, 120, 210, 320).

9. Le procédé selon l'une quelconque des Revendications 1 à 8, comprenant en outre :
l'opération consistant à amener un en-tête et une description de l'échantillon (220, 310) du contenu visuel à être modifiés avant une transmission à partir du dispositif d'utilisateur (110, 112, 114, 116, 118, 120, 210, 320) afin d'empêcher une détection de l'échantillon (220, 310) sous la forme d'une image par le réseau de fournisseur de services (314).

10. Le procédé selon l'une quelconque des Revendications 1 à 9,
dans lequel le réseau de fournisseur de services (314) est un ou plusieurs réseaux parmi un réseau de données filaire, un réseau de données sans fil et/ou un réseau cellulaire.

11. Le procédé selon l'une quelconque des Revendications 1 à 10,
dans lequel le dispositif d'utilisateur (110, 112, 114, 116, 118, 120, 210, 320) est un dispositif parmi : un dispositif informatique portatif (110, 114), un dispositif informatique monté sur véhicule, un dispositif informatique stationnaire (112) ou un téléphone intelligent (116).

12. Un serveur (400) fournissant la détermination d'une qualité d'image par l'intermédiaire de réseaux de fournisseurs de services (314), le serveur (400) comprenant :
un module de communication (466) adapté de façon à communiquer de manière non filaire avec un ou plusieurs dispositifs d'utilisateur (110, 112, 114, 116, 118, 120, 210, 320) par l'intermédiaire d'un réseau de fournisseur de services (314),
une mémoire (406) adaptée de façon à conserver en mémoire des instructions, et
un processeur (404) couplé au module de communication (466) et à la mémoire (406), le processeur (404) étant adapté de façon à exécuter les opérations décrites dans l'une quelconque des Revendications 1 à 11.

13. Un support à mémoire lisible par ordinateur (520, 600, 602, 604, 606, 608, 610) contenant des instructions conservées en mémoire sur celui-ci destinées à la détermination d'une qualité d'image pour des images transmises par l'intermédiaire de réseaux de fournisseurs de services (314), les instructions comprenant des instructions destinées à l'exécution des opérations décrites dans l'une quelconque des Revendications 1 à 11.

14. Un dispositif informatique (110, 112, 114, 116, 118, 120, 210, 320) destiné à l'affichage d'un contenu visuel reçu par l'intermédiaire de réseaux de fournisseurs de services (314), le dispositif informatique (110, 112, 114, 116, 118, 120, 210, 320) comprenant :
un module de communication adapté de façon à communiquer de manière non filaire avec un fournisseur de services (104, 206),
une mémoire adaptée de façon à conserver en mémoire des instructions,
un processeur couplé au module de communication et à la mémoire, le processeur étant adapté de façon à :
recevoir un premier contenu visuel dans un format compressible à partir d'un fournisseur de contenus (102, 202, 302) par l'intermédiaire d'un réseau de fournisseur de services (314),
compresser un échantillon du premier contenu visuel,
modifier un en-tête et une description de l'échantillon du premier contenu visuel afin d'empêcher une détection de l'échantillon sous la forme d'une image par le réseau de fournisseur de services (314),
transmettre (220) l'échantillon du premier contenu visuel tel que remis au fournisseur de contenus (102, 202) par l'intermédiaire du réseau de fournisseur de services (314), l'échantillon du premier contenu visuel étant employé par le fournisseur de contenus (102, 202) de façon à déterminer si le premier contenu visuel a été soumis à une opération parmi un transcodage ou une optimisation par le réseau de fournisseur de services (314),
recevoir un deuxième contenu visuel à partir du fournisseur de contenus (102, 202) par l'intermédiaire du réseau de fournisseur de services (314), le deuxième contenu visuel possédant au moins un aspect de qualité ajusté en fonction de la détermination, et
afficher le deuxième contenu visuel à un utilisateur, et
dans lequel le premier contenu visuel (204, 306) est le contenu visuel préliminaire transmis avant la transmission du deuxième contenu demandé par l'utilisateur, et
dans lequel le contenu visuel préliminaire est rendu en dehors d'un écran de visualisation du dispositif informatique (110, 112, 114, 116, 118, 120, 210, 320) sans être détectable par l'utilisateur.

15. Le dispositif informatique selon la Revendication 14,
dans lequel le premier contenu visuel est une image parmi : une image test générique de petite taille ou une image échantillon provenant du deuxième contenu visuel à transmettre.
